# EUROPÄISCHE PATENTSCHRIFT

(11) **EP 3 916 450 B1**
(45) Veröffentlichungstag und Bekanntmachung des Hinweises auf die Patenterteilung: **22.02.2023**
(21) Anmeldenummer: 20177461.9
(22) Anmeldetag: 29.05.2020
(51) Int. Cl.: G02B 6/44

(54) **SPLEISSMODUL MIT FÜHRUNG FÜR PATCHKABEL**
SPLICE MODULE WITH GUIDE FOR PATCH CABLE
MODULE D'ÉPISSURE POURVU DE GUIDAGE POUR CORDONS DE BRASSAGE

(43) Veröffentlichungstag der Anmeldung: 01.12.2021
(73) Patentinhaber: Hauff-Technik GRIDCOM GmbH, 73494 Rosenberg (DE)
(72) Erfinder: GSCHWINDER, Roland, 73431 Aalen (DE)
(74) Vertreter: König Szynka Tilmann von Renesse Patentanwälte Partnerschaft mbB München

(56) Entgegenhaltungen:
- EP-A2- 0 657 757
- WO-A1-2020/061144
- US-A- 5 511 144
- US-A- 5 731 546
- US-A1- 2013 214 662
- US-A1- 2017 227 728
- US-A1- 2019 250 350
- US-B1- 6 678 455

## Beschreibung

Die Erfindung betrifft einen Stapel von Spleißmodulen für Lichtwellenleiterkabel ("LWL-Kabel"). Solche Lichtwellenleiterkabel sind auch als Glasfaserkabel bekannt.

LWL-Kabel dienen zur Signalübertragung mit hohen Übertragungsraten und/oder hoher räumlicher Reichweite und finden immer stärkeren Einsatz. Insbesondere werden zunehmend die LWL-Kabelnetze bis zum Verbraucher verlegt oder sogar bis zum Endgerät im Haushalt oder Büro. Mit dem Ausbau der LWL-Kabelnetze stellt sich immer häufiger die Aufgabe der Verbindung von LWL-Kabeln untereinander.

Dabei werden die einzelnen Fasern mit einer an sich bekannten Technologie aneinandergefügt und diese sogenannten Spleiß- und Patchstellen in ebenfalls an sich bekannter Weise geordnet sowie zugänglich und geschützt untergebracht. Man spricht von Spleißmodulen, in denen typischerweise eine Mehrzahl (z. B. zwölf oder eine Vielzahl von zwölf) Glasfasern in Kabeln mit jeweils einer einzelnen Glasfaser in jeweiligen Spleißkassetten gespleißt sind und mit kurzen Anschlusskabeln (Pigtails) auf Abschlusselemente (etwa Stecker und Kupplungen) geführt werden. Dort können dann zur Weiterführung der Glasfaserverbindungen LWL-Kabel mit Verbindungselementen (etwa Steckern), insbesondere Patchkabel, eingesetzt werden. Im Folgenden bezieht sich der Begriff des LWL-Kabels also auf einen Kabeltyp im Bereich eines solchen Spleißmoduls und nicht auf ein bspw. unter einer Straße vergrabenes "Glasfaserkabel" mit einem dicken und vielfältigen Bündel einzelner Fasern.

Zur Zugänglichkeit zu den einzelnen Spleiß- und Patchstellen verfügen bekannte Spleißmodule typischerweise über einen bewegten schubladenähnlichen Auszug und eine ortsfeste Halterung. Bei besonderen Varianten ist der Auszug nicht translatorisch auszuziehen, sondern um eine Schwenkachse, typischerweise in der Nähe der Ecke der Halterung, aufschwenkbar. Im Folgenden wird diesbezüglich von einem Schwenkmodul gesprochen (also quasi einer Drehlade anstelle einer Schublade). Beispielhaft kann verwiesen werden auf die EP 2 221 650 A1.

Die translatorischen Schubladenbewegungen führen zu Bewegungen der sogenannten Patchkabel, die an die Verbindungselemente der Anschlussfasern angeschlossen sind. Solche Bewegungen können zu unerwünschten Zugbelastungen oder Biegebelastungen einzelner LWL-Kabel (Patchkabel) führen. Dabei ist insbesondere zu berücksichtigen, dass die LWL-Kabel zur Vermeidung unerwünschter Verluste bestimmte Biegeradien nicht unterschreiten sollen. Dementsprechend sind im Stand der Technik bereits Führungskonstruktionen bekannt, in denen die betroffenen Patchkabel beim translatorischen Ausziehen oder Hineinschieben einer Schublade von Elementen gestützt werden, die typischerweise mit der halben Geschwindigkeit der Schublade, also übersetzt, mitbewegt werden.

Ferner wird verwiesen auf die EP 3 511 753 A1, die sich mit einer verbesserten Lösung für Schwenkmodule befasst. Dabei werden LWL-Kabel von einer Führung, die im Wesentlichen den Kabelverlauf im schwenkachsennächsten Bereich an den Schwenkmodulen bestimmt, in eine S-Form gebracht. Schädliche Auswirkungen der Schwenkbewegungen der Schwenkmodule auf weiter entfernt liegende Kabelbereiche werden insoweit reduziert.

Die EP 0 657 757 A2 zeigt eine Glasfaserverteilungseinrichtung mit ausziehbaren Schubladen, worauf Spleißablagen und Patchstellen angeordnet sind. Vor der Patchstellenreihe sind spiegelsymmetrische Führungsstifte als Biegeschutzelemente angeordnet. Das liegt dem Oberbegriff des Anspruchs 1 zugrunde.

Die US 5 511 144 A zeigt eine LWL-Kabel-Verteilungseinrichtung mit ausziehbaren Schubladen, worauf Patchstellen und Spleißablagen angeordnet sind. Außerdem sind asymmetrische Biegeschutzelemente vor der jeweiligen Patchstellenreihe zum Wegführen von LWL-Kabel angeordnet.

Die WO 2020/061144 A1 zeigt eine Vorrichtung zum Aufnehmen und Verbinden von LWL-Kabeln mit einem Gehäuse, worin mehrere Spleißstellenablagen gelagert werden können und eine Patchstellenreihe angeordnet ist. Vor der Patchstellenreihe sind außerdem eine Mehrzahl von Spulen zum Aufnehmen von aus den Patchstellen austretenden Faserüberlängen angeordnet.

Auf der Grundlage des geschilderten Standes der Technik liegt der vorliegenden Erfindung die Aufgabe zugrunde, eine hinsichtlich der mechanischen Belastung der LWL-Kabel bei schwenkbaren Spleißmodulen weiter verbesserte Lösung anzugeben.

Zur Lösung dieser Aufgabe richtet sich die Erfindung auf ein Spleißmodul nach Anspruch 1. Konkret weist dieses Spleißmodul definitionsgemäß Spleißstellenablagen für LWL-Kabel auf, zum Beispiel in einer Mehrzahl gestapelter Spleißkassetten für zum Beispiel jeweils eine Mehrzahl Spleißstellen. Außerdem verfügt das Spleißmodul über Patchstellen, an denen von den Spleißstellen zu den Patchstellen führende sogenannte Pigtailkabel mit lösbaren Verbindungseinrichtungen an sogenannte Patchkabel angeschlossen werden können, welche von den Patchstellen weiterführen. Der mit dem jeweiligen Pigtailkabel verbundene Teil der Verbindungseinrichtung wird hier als erster Teil bezeichnet, der mit dem Patchkabel verbundene Teil als zweiter Teil. Durch Verkoppeln des ersten und des zweiten Teils werden also ein Pigtailkabel und ein Patchkabel verkoppelt ("verpatcht"). Ferner sind die Patchstellen, also die Plätze der jeweiligen Verbindungseinrichtungen, nebeneinander angeordnet, und zwar in einer zu einer lokalen Leitungsrichtung gewinkelten Richtung. Mit der lokalen Leitungsrichtung wird hier die LWL-Kabelrichtung in der jeweiligen Verbindungseinrichtung bezeichnet, also in anderen Worten die dort existierende Ausbreitungsrichtung des Lichtsignals, wobei diese Richtungen vorzugsweise für alle Patchstellen parallel zueinander sind. In einer dazu gewinkelten, vorzugsweise durchgehend gleichen Richtung liegen die Patchstellen nebeneinander, wobei dadurch nicht ausgeschlossen ist, dass sie noch in einer weiteren solchen Richtung nebeneinanderliegen. In anderen Worten liegen die Patchstellen mindestens in einer Dimension nebeneinander, wobei sie aber auch zusätzlich in einer zweiten Dimension, also als zweidimensionale Anordnung, nebeneinanderliegen können. Grundsätzlich ist es dabei auch denkbar, wenngleich nicht bevorzugt, dass die Anordnung nebeneinander nicht geradlinig ist. In der Praxis treten geradlinige Reihungen auf, wobei, wie gesagt, auch zum Beispiel zwei oder mehr als zwei Reihen möglich sind, wobei die Reihen in der zweiten Richtung nebeneinanderliegen. Hier ist allerdings eine einzige Reihe bevorzugt.

In der früheren Anmeldung EP 3 528 023 A1 wird eine zusätzliche Mehrzahl von Durchgangsstellen für den Durchgang durchlaufender (ununterbrochener) LWL-Kabel anstelle einer nächstbenachbarten Patchstelle erläutert. Solche Ausgestaltungen mit durchlaufenden Kabeln, zusätzlich zu den Patchstellen, sollen hier mit inbegriffen sein, denn die durchlaufenden Kabel treten alternativ zu einer Verbindung aus Patchkabeln und Pigtailkabeln auf (und ersetzen beide). Die durchlaufenden Kabel werden in den Durchgangsstellen vorzugsweise ebenfalls fixiert, sodass sich grundsätzlich eine ganz ähnliche Problematik stellt und für solche Kabel die gleichen Führungsstifte benutzt werden können. Insbesondere sind diese durchlaufenden Kabel als Alternative zu den (ihnen nächstbenachbarten) Patchstellen gedacht, sodass im Regelfall entweder ein durchlaufendes Kabel oder die Kombination aus Patchkabel und Pigtailkabel vorliegt und die jeweiligen Zwischenräume dann durch eine der beiden Alternativen (durchlaufendes oder Patchkabel) genutzt werden können.

Aus diesen Erläuterungen ergibt sich schon, dass die Patchkabel von den Verbindungseinrichtungen wegführen, und zwar zumindest zunächst zu einer von den Pigtailkabeln entgegengesetzten Seite. Etwas entfernt von den Verbindungseinrichtungen sind erfindungsgemäß Führungsstifte vorgesehen, die so voneinander beabstandet sind, dass zwischen ihnen die Patchkabel geführt werden können. Die Patchkabel sollen also in Zwischenräume zwischen den Führungsstiften eingelegt werden, wobei der Begriff des "Stifts" impliziert, dass diese an einem (distalen) Ende voneinander separat sind, also nicht miteinander verbunden. Von dieser Seite aus können die Patchkabel dann in den Zwischenraum zwischen den Führungsstiften eingelegt werden, sie müssen also nicht durch eine Öffnung zwischen auf zwei Seiten miteinander verbundenen Stegen oder Ähnlichem hindurch gefädelt werden (entlang ihrer Längsrichtung). Die Einlegebewegung erfolgt also im Wesentlichen senkrecht zur Kabelrichtung.

Zu dem Begriff "Führungsstift" gehört ferner, dass dieser entlang einer Längsrichtung zwar nicht unbedingt gerade, aber jedenfalls länger als breit ist. Vorzugsweise sind die Führungsstifte mindestens doppelt so lang wie breit, wobei die weiter unten noch erläuterten verbreiterten distalen "Köpfe" hier nicht mitbetrachtet werden. Wie schon beschrieben, können die Patchkabel von den distalen Enden der Führungsstifte aus eingelegt werden. An den dazu entgegengesetzten Enden der Führungsstifte sind diese vorzugsweise gehalten, und zwar vorzugsweise auf einer gemeinsamen und zwischen den Führungsstiften durchgehenden Basis, etwa einer Halteschiene oder -platte. Insoweit hat also die Gesamtanordnung der Mehrzahl Führungsstifte bei einer größeren Zahl zum Beispiel etwas Kamm-ähnliches.

Der Begriff "breit" bezieht sich dabei zumindest auf eine Richtung, vorzugsweise auf beide zu der Längsrichtung senkrechte Richtungen. Die zumindest eine Richtung ist ungefähr senkrecht zu der lokalen Verlaufsrichtung der Patchkabel, wobei in der ungefähr zu den Patchkabeln parallelen Richtung auch größere Dimensionen der Stifte auftreten können.

Jedenfalls kann mit den Führungsstiften sichergestellt werden, dass die Patchkabel in Bezug auf ihre örtliche Festlegung an den Patchstellen nicht zu stark gekrümmt oder gar geknickt weitergeführt werden. Die Führungsstifte bzw. die Zwischenräume zwischen ihnen definieren nämlich den Patchkabelverlauf zusätzlich. Ferner kann ein gewisser Schutz vor unbeabsichtigten Zugbelastungen entlang der Patchkabellänge gewährleistet werden, sodass sich solche Zugbelastungen jedenfalls nicht völlig uneingeschränkt auf die Patchstellen selbst und damit die empfindlichen Verbindungseinrichtungen bzw. Kontaktstellen zwischen den eigentlichen Glasfaser-Stirnflächen übertragen. Dazu können die weiter unten noch diskutierte Formgebung der Führungsstifte, ihre Anordnung und auch eine gewisse Restelastizität in ihrer Ausführung (etwa als Kunststoff-Spritzgussteil) beitragen. Insbesondere begünstigt die schon angesprochene Ausführung als "Stifte" mit beschränkter Breite ein Nachgeben derselben bei Belastungen ungefähr quer zu ihrer Längsrichtung.

Wie bereits angesprochen sind die Führungsstifte vorzugsweise in einer geraden Reihe nebeneinander angeordnet. Dasselbe gilt vorzugsweise für die Patchstellen. Die beiden Reihen der Führungsstifte einerseits und der Patchstellen andererseits sind dabei vorzugsweise mindestens insoweit parallel zueinander ausgerichtet, als dies eine Projektion auf eine zu der lokalen Leitungsrichtung senkrechte Ebene, also eine Projektion in dieser lokalen Leitungsrichtung, betrifft. Dabei wird unterstellt, dass die lokalen Leitungsrichtungen der Patchstellen identisch oder jedenfalls relativ wenig voneinander verschieden sind. Ansonsten ist eine Richtung des minimalen Abstandes zwischen den beiden Reihen gemeint. Vorzugsweise sind die Reihen generell parallel.

Ferner stehen die Führungsstifte in diesem Fall vorzugsweise senkrecht zu ihrer Reihenrichtung, wobei ihr Verlauf entlang ihrer jeweiligen Stiftlängsrichtung gewissermaßen im Mittelwert betrachtet wird. Die Stifte müssen deswegen nicht unbedingt genau gerade ausgeführt sein.

An dem bereits erwähnten distalen Ende können die Führungsstifte, zumindest ein Teil der Führungsstifte, auch verbreitert sein, also in zumindest einer Richtung senkrecht zu ihrer Längsrichtung an diesem distalen Ende größere Abmessungen aufweisen. Damit kann insbesondere das unbeabsichtigte Herausgelangen einzelner Patchkabel aus den Zwischenräumen zwischen den Führungsstiften besser verhindert werden. Die Verbreiterungen können lokal die Zwischenabstände zwischen den Führungsstiften verringern, und zwar auch in solchem Umfang, dass Patchkabel nur unter leichtem Kraftaufwand und dabei elastischer Verbiegung von Führungsstiften eingelegt werden können. Zur Veranschaulichung wird auf das Ausführungsbeispiel verwiesen.

Erfindungsgemäß sind die Patchstellen und die Führungsstifte in ihrer jeweiligen Mehrzahl und Anordnung spiegelsymmetrisch aufgebaut. Dies bezieht sich auf eine zentrale Symmetrieebene senkrecht zu der Reihenrichtung der Patchstellen oder, soweit diese divergiert, zu einer Richtung des Minimalabstands zwischen der Reihe der Führungsstifte und der Reihe der Patchstellen. Bei regelmäßig gereihten Patchstellen, die aber nicht eine gerade Reihe bilden, kann auch eine gemittelte Richtung de Patchstellenreihe eine sinnvolle Bezugsgröße für die Symmetrieebene sein.

Dementsprechend kann das Spleißmodul, jedenfalls was die gerade beschriebene Ausgestaltung angeht, universell eingesetzt werden, insbesondere wahlweise für eine links oder rechts vorne liegende Schwenkachse für die Bewegbarkeit in einem Spleißmodulstapel.

Die Führungsstifte können auch für Beschriftungsfelder für die Patchkabel benutzt werden, was eine gemeinsame Trägerschiene oder Trägerplatte einschließt. Zum Beispiel können unter den Zwischenräumen zwischen den Führungsstiften an einem solchen Träger Nummern angebracht sein. Dies erleichtert die richtige Zuordnung und Verwaltung der Patchkabel.

Zwischen den Verbindungseinrichtungsteilen und den Führungsstiften besteht erfindungsgemäß ein Zwischenabstand, wie schon erläutert wurde. Dieser beträgt vorzugsweise mindestens 30 mm, besonders bevorzugterweise 35 mm, 40 mm oder sogar mindestens 45 mm. Diese Abstände beziehen sich jeweils auf die nächsten Abstände zwischen den Führungsstiften und den beim Herauslösen der Patchkabel verbleibenden Verbindungseinrichtungsteilen, also insbesondere Aufnahmen für Stecker. Beim Ausführungsbeispiel sind es 47 mm. Dies trägt zum Schutz der Patchkabel bei. Außerdem ist bevorzugt, dass zumindest in einem wesentlichen Bereich in diesem Zwischenabstand eine Durchgriffsmöglichkeit besteht. Dadurch lassen sich die zweiten Verbindungseinrichtungsteile, also zum Beispiel an den Patchkabelenden befestigte Steckelement, leichter an den ersten Verbindungseinrichtungsteilen anbringen. Zum Beispiel kann man von oben und von unten kommend jeweils mit zumindest einem Finger ein solches Steckelement oder anderes Verbindungseinrichtungsteil greifen und manipulieren. Die Durchgriffsmöglichkeit meint also eine von oberhalb des Spleißmoduls nach unterhalb des Spleißmoduls bestehende Öffnung, die für Finger einer Bedienperson ausreichend groß ist.

Ein weiterer Vorteil der erfindungsgemäßen Ausgestaltung betrifft einen Schutz vor aus den Pigtailkabeln austretenden Lichtsignals, insbesondere Laserstrahlung. Wenn nämlich an den Patchstellen keine Patchkabel angebracht sind, liegen die Stirnflächen der Pigtailkabel möglicherweise in einer Blickrichtung in ihrer lokalen Leitungsrichtung an der Patchstelle unverdeckt frei. Die erfindungsgemäßen Führungsstifte oder ein Teil derselben sind nämlich so positioniert, dass sie in der entsprechenden Richtung, also im Weg des im Gefährdungsfall austretenden Lichts, angeordnet sind. Sie sind also auf eine Projektion der lokalen Leitungsrichtung an den Patchstellen ausgerichtet und schatten damit die erwähnten Stirnflächen im Fall eines fehlenden Patchkabels ab. Dies bietet einen deutlichen Sicherheitsgewinn und verursacht keinen wesentlichen Zusatzaufwand.

Insbesondere sind die Führungsstifte vorzugsweise gegenüber dem übrigen Spleißmodul unbeweglich montiert (allerdings mit dem Spleißmodul innerhalb dessen Stapels, soweit vorhanden, beweglich), sodass eine solche geometrische Justage relativ leicht möglich ist.

Der gerade besprochene Aspekt der Abschattung soll vorsorglich auch unabhängig von den zuvor diskutierten Führungsfunktionen der Stifte offenbart werden; diese Offenbarung ist nicht gemäß der beanspruchten Erfindung und richtet sich also auch auf eine Mehrzahl Stifte mit dieser Abschattungsfunktion, die nicht zu Führungsaufgaben für Patchkabel heranzuziehen sind oder herangezogen werden. Das gilt auch in Kombination mit weiteren Merkmalen dieser Offenbarung, soweit diese Merkmale nicht unmittelbar auf die Führung der Patchkabel bezogen sind.

Im Ausführungsbeispiel und generell vorzugsweise sind die Führungsstifte nicht nur in einer, sondern in mindestens zwei, vorzugsweise genau zwei Reihen vorgesehen, welche Reihen vorzugsweise in der lokalen Leitungsrichtung (an den Patchstellen) voneinander beabstandet sind. Dann können die Patchkabel in einer differenzierteren Form geführt werden, nämlich durch Zwischenabstände zwischen Führungsstiften in einer Reihe und zusätzlich Zwischenabstände zwischen Führungsstiften der zweiten Reihe. Diese Zwischenabstände sind dabei nicht zwingend in der Richtung des Patchkabels von den Patchstellen zu der näheren Führungsstiftreihe aufeinander ausgerichtet oder zu kombinieren. Vielmehr kann mit Rücksicht auf den weiteren Verlauf der Patchkabel diesem bereits eine davon abweichende Richtung gegeben werden. Insbesondere können Sie mit einer leichten Krümmung durch die mindestens zwei Reihen Verbindungsstifte geführt werden, vergleiche das Ausführungsbeispiel.

Außerdem bieten die beiden Reihen die Möglichkeit, die Führungsstifte der einen in Bezug auf diejenigen der anderen Reihe(n) auf Lücke anzuordnen. Damit kann durch den Versatz zwischen den Führungsstiften bereits die gerade angesprochene Krümmung oder Neigung des Patchkabels erreicht werden, vergleiche das Ausführungsbeispiel. Ferner kann die ebenfalls bereits beschriebene Abschattungsfunktion weiter verbessert werden. Wenn die auf Lücke angeordneten Verbindungsstifte nämlich in den relevanten Lichtausbreitungsrichtungen betrachtet dicht liegen, erübrigt sich eine Justage in der Richtung der jeweiligen Reihen. Auch wenn sie nicht dicht liegen, wie beim Ausführungsbeispiel, ist jedenfalls die Restwahrscheinlichkeit eines Hindurchgelangens eines Lichtsignals zwischen den Führungsstiften selbst bei fehlerhafter oder durch irgendwelche Veränderungen verloren gegangener Justage deutlich geringer.

Die Führungsstifte müssen nicht zwingend in einer der Zahl der Patchstellen entsprechenden oder ähnlichen Zahl vorhanden sein. Zum Beispiel können Patchkabel aus benachbarten Patchstellen durchaus durch dieselben Zwischenräume geführt werden. Zugunsten von Übersicht und Verwaltung und auch in Verbindung mit den bevorzugten Kennzeichnungen (Nummern) ist allerdings eine sozusagen bijektive Zuordnung von Zwischenräumen und Patchstellen bevorzugt. Dies bedeutet nicht zwingend eine identische Zahl von Führungsstiften, denn zum Beispiel an den äußeren Rändern können die Zwischenräume zwischen einem (inneren) Führungsstift und einem (äußeren) anderweitig gestalteten Randobjekt bestehen. Auch könnte es in der Mitte der Führungsstiftreihe ein etwas breiteres Objekt geben, etwa als Halterung oder in Verbindung mit der unten noch beschriebenen Stütze. Insoweit sind für eine Zahl n von Patchstellen mindestens n-2 Führungsstifte und, etwa bei der Ausgestaltung mit zwei versetzten Führungsstiftreihen, mindestens 2n-4 Führungsstifte bevorzugt.

Auf der von den Patchstellen abgewandten Seite der Führungsstiftanordnung laufen die Patchkabel im Regelfall im Wesentlichen seitlich weiter, also gewinkelt zu der lokalen Leitungsrichtung in den Patchstellen. Dabei kann es hilfreich und bevorzugt sein, eine Stütze für Patchkabel vorzusehen, zum Beispiel ungefähr in der Mitte in Bezug auf die Längserstreckung der Führungsstiftanordnung (oder bei mehr als einer Stütze gleichmäßig über die entsprechende Breite verteilt). Diese Stütze schließt sich an eine die Verbindungstifte haltende Trägerstruktur an und bietet zumindest die Möglichkeit, die von einer Seite kommenden Patchkabel von unten her gegen die Schwerkraft zu stützen, wenn diese zur anderen Seite weiterlaufen. Besonders bevorzugterweise erfolgt die Stützung nicht nur von unten, sondern werden die Patchkabel von der Stütze auch noch von "vorn" gehalten, also von der von den Patchstellen abgewandten Seite. Damit können Sie weniger leicht von der Stütze herunterfallen und sind in einem gewissen Umfang gebündelt. Zur weiteren Absicherung kann sich die Stütze auch noch so weit fortsetzen, dass sie ein Patchkabelbündel von oben hält, vergleiche das Ausführungsbeispiel. Im Ausführungsbeispiel hat die Stütze eine im entspannten Zustand weitgehend geschlossene Form, läuft also fast vollständig um. Sie kann aufgrund ihrer Eigenelastizität (als Kunststoffteil) im oberen Bereich etwas aufgebogen werden, um Patchkabel hineinlegen zu können. Im Übrigen hält sie ein Patchkabelbündel sicher und schafft damit zusätzlich Ordnung.

Zumindest ein Teil der Führungsstifte hat vorzugsweise ein Querschnittsprofil, das zumindest zwei Begrenzungslinien mit einem Krümmungsradius von mindestens 30 mm aufweist. Da andererseits eine möglichst raumökonomische Umlenkung von Vorteil ist, vergleiche das Ausführungsbeispiel, liegt der Krümmungsradius dieser Begrenzungslinie vorzugsweise nicht über 50 mm, besonders bevorzugterweise nicht über 45 mm, 40 mm oder sogar nicht über 35 mm.

Die Schnittebene durchläuft die Führungsstifte und die Patchstellen und vorzugsweise die Reihe der Führungsstifte. Die Kabelrichtung zwischen den Patchstellen und den Führungsstiften läuft also vorzugsweise in der oder parallel zu der Schnittebene. Die Begrenzungslinien sind vorzugsweise Kreisbögen, können aber auch von der Kreisbogenform abweichen, wobei auch dann der genannte Radius nicht unterschritten wird. Sie dienen zur Anlage eines geführten Kabels an den jeweiligen Begrenzungslinien und stellen in diesem Bereich dessen Knickfreiheit sicher. Dies wird im Rahmen des Ausführungsbeispiels noch näher erläutert und funktioniert dann besonders zuverlässig, wenn die Führungsstifte relativ eng stehen. Diese Ausgestaltung betrifft möglicherweise nicht alle Führungsstifte und im Fall einer Mehrzahl von Reihen vorzugsweise die in mindestens einer Reihe, vgl. das Ausführungsbeispiel.

Ferner sind vorzugsweise nicht alle Führungsstifte an ihrem distalen Ende verbreitert, wie weiter oben schon erläutert, und können insbesondere die Führungsstifte in einer aus einer Mehrzahl Reihen (z. B. der von den Patchstellen am weitestens entfernten) ein solches verbreitertes Ende aufweisen und diejenigen in der oder den anderen Reihen nicht.

Die vorstehende und die nachfolgende Beschreibung beziehen sich auch auf die Verfahrens- und die Verwendungskategorie, denn die verschiedenen Details sind ja auch in Verbindung mit dem Vorgang des Anbringens und Ordnens von Patchkabeln in Beziehung zu setzen. Insoweit sollen diese beiden Kategorien im Hinblick auf alle technischen Einzelheiten als mitoffenbart gelten.

Im Folgenden wird die Erfindung anhand eines Ausführungsbeispiels näher beschrieben, dessen einzelne Merkmale im Rahmen der Ansprüche auch in anderen Kombinationen wesentlich sein können.

Es zeigt:
- Figur 1: eine perspektivische Darstellung eines vereinfachten erfindungsgemäßen Spleißmoduls,
- Figur 2: einen Ausschnitt B aus Figur 1 vergrößert,
- Figur 3: eine Frontansicht des Spleißmoduls und
- Figur 4: eine Draufsicht auf das Spleißmodul,
- Figur 5: eine teils geschnittene Teildarstellung zu Fig. 4 und
- Figur 6: ein vergrößertes Detail aus Figur 5.

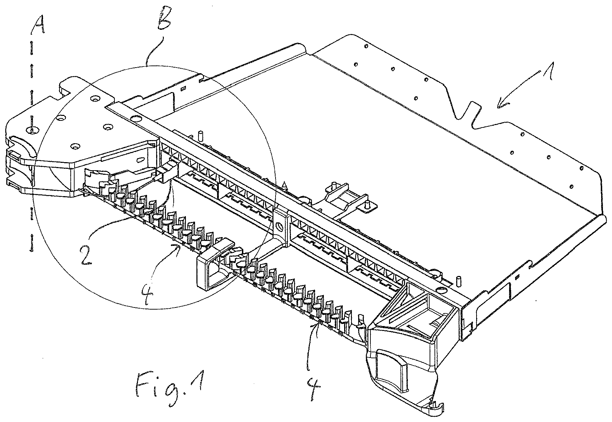

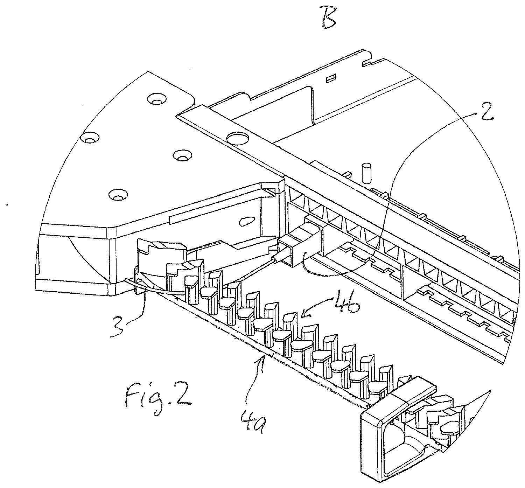

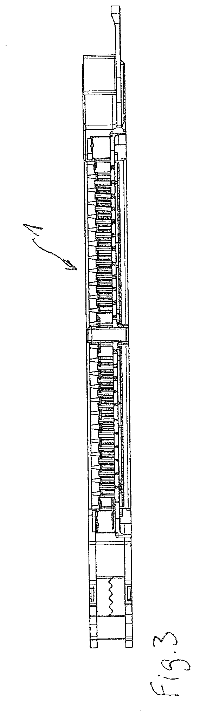

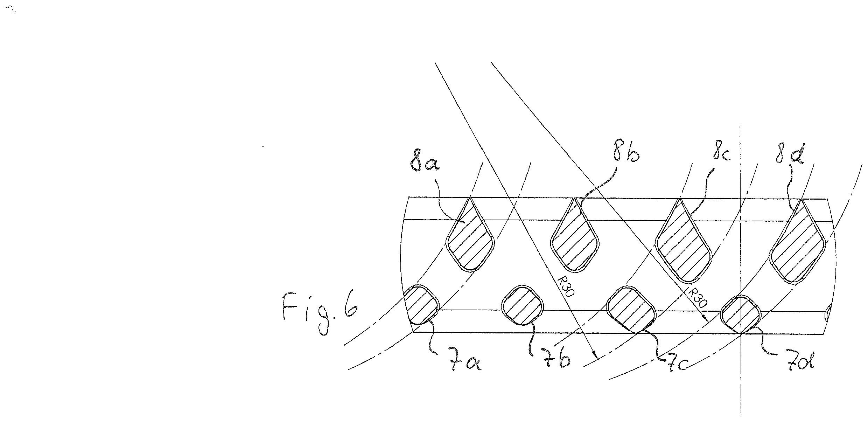

Zunächst wird zum Verständnis des Gesamtzusammenhangs auf die beiden bereits zitierten Dokumente EP 2 221 650 A1 und EP 3 511 753 A1 oder auch die EP 3 528 023 A1 verwiesen. Insbesondere zeigen die Figuren 1 und 3 in der erstgenannten einen einschlägigen Verteilerschrank mit einer Mehrzahl Spleißmodulstapel und zeigt die Figur 2 dort einen solchen Spleißmodulstapel mit rechts vorne liegender Schwenkachse A. In dem zweitgenannten Zitat sieht man den Verteilerschrank in Figur 8 und einen Spleißmodulstapel mit ebenfalls rechts vorne liegender Schwenkachse A in Figur 7. Figur 6 dort zeigt ein einzelnes schwenkbares Spleißmodul aus dem Stapel mit vorne liegenden steckbaren Patchstellen und dahinter zwei vertikalen Stapeln aus einer Vielzahl Spleißkassetten, die jeweils eine Mehrzahl Spleißstellenablagen enthalten.

Figur 1 der vorliegenden Anmeldung entspricht weitgehend dieser zuletzt beschriebenen Figur 6, wobei allerdings die Schwenkachse A diesmal links vorne liegt. Das dargestellte Spleißmodul 1 ist zur Vereinfachung ohne Spleißstellenablagen, d. h. ohne die einschlägigen Spleißkassetten gezeigt, die man sich aber analog zu der Figur 6 in der EP 3 511 753 A1 hinzudenken kann.

Im Übrigen zeigt Figur 1 (und natürlich auch die Vergrößerung des Bereichs B in Figur 2) eine steckbare Patchstelle 2, wobei die Figuren bereits veranschaulichen, dass tatsächlich (statt der einen dargestellten Patchstelle 2) 24 (nämlich 4 × 6) davon nebeneinander vorgesehen werden können. Man erkennt ferner, dass ein aus einer solchen steckbaren Patchstelle 2 herausführendes einzelnes Glasfaserkabel 3 durch den Patchstellen 2 vorgelagerte Reihen 4 von Führungsstiften hindurchgeführt ist und davor dann nach links in Richtung zur Schwenkachse A weiterläuft. Zur Verdeutlichung der Struktur des Spleißmoduls ist das Glasfaserkabel 3 in der Darstellung hier allerdings abgeschnitten.

Weiterhin zeigt das Spleißmodul 1 aus den Figuren 1 und 2 über der eingezeichneten Patchstelle 2 eine Reihe untereinander gleicher Öffnungen, und zwar in einer 1:1-Zuordnung zu den Patchstellen 2. Hierzu kann zum technischen Hintergrund zunächst verwiesen werden auf die EP 3 528 023 A1 der selben Anmelderin, vergleiche dort die Öffnungen 19 und die zugehörigen Steckelemente 14 in den Figuren 7 ff. Es geht hierbei um alternative Öffnungen für Patchstellen 2, und zwar für nicht aufzutrennende, also durchgehende Glasfaserkabel.

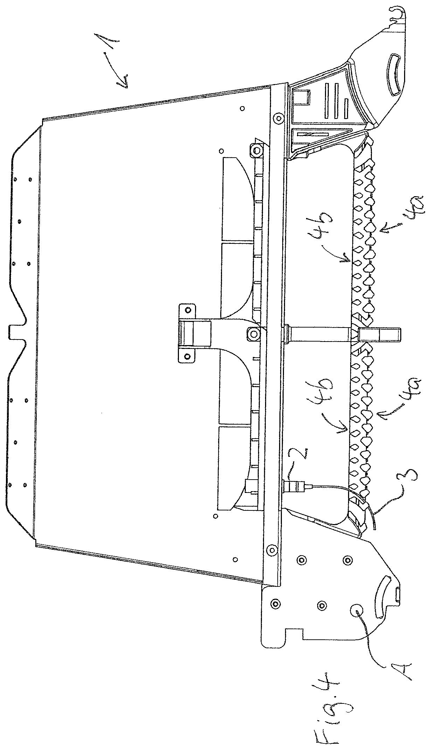

In Figur 4, einer Draufsicht auf das Spleißmodul aus den Figuren 1 und 2, erkennt man noch deutlicher, dass es sich bei den Führungsstiften um eine Gesamtanordnung im Wesentlichen in 2 Reihen 4a und 4b handelt, wobei die in Figur 4 untere Reihe 4a, die zu den Patchstellen 2 weiter entfernt ist, im Folgenden als vordere Reihe 4a und die andere als hintere Reihe 4b bezeichnet wird. Zusammen mit der Frontansicht (in Bezug auf Figur 4 von unten gesehen) in Figur 3 erkennt man dabei, dass die Führungsstifte in diesen Reihen 4a und 4b auf Lücke miteinander liegen und die in der Perspektive der Figur 3 dahinterliegenden Patchstellen 2 fast lückenfrei abdecken.

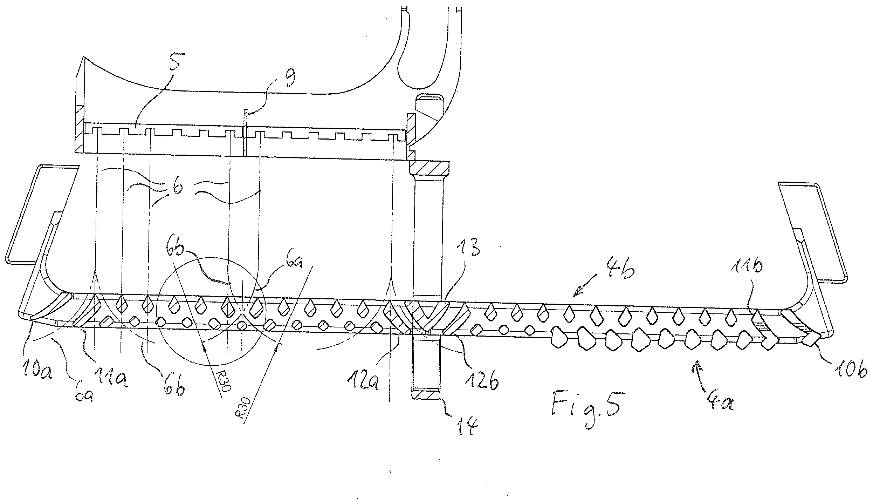

Figur 5 zeigt einen Bauteil des Spleißmoduls, insbesondere die Reihen 4a und b, in der Draufsicht entsprechend Figur 4 und teils geschnitten. Figur 6 zeigt eine Ausschnittdarstellung dazu, nämlich den in Figur 5 eingekreisten Teil der beiden Reihen 4a und b mit individuellen Bezugszeichen für die einzelnen Führungsstifte. Figur 5 zeigt außerdem in ihrem oberen Bereich einen Schnitt durch die Patchstellen 2, wobei eine mit 5 bezifferte Struktur mit Sägezahnform im unteren Bereich mit den einzelnen sägezahnförmigen Ausnehmungen die Patchstellen 2 markiert, vergleiche die vertikalen Referenzlinien in Figur 5. Insoweit sieht man, dass die einzelnen Führungsstifte in der hinteren Reihe 4b mit ihrer jeweiligen hinteren (in Figur 5 oberen) Ecke zu den Patchstellen 2 fluchten und die Führungsstifte in der vorderen Reihe 4a dazu genau auf Lücke liegen. Damit, auch in Verbindung mit Figur 3, lässt sich verstehen, dass die Führungsstifte der hinteren Reihe 4b etwaige aus den Patchstellen 2 austretende Lasersignale (mit vertikaler Ausbreitungsrichtung in Bezug auf Figur 5) sicher abblocken.

Ferner sieht man in Figur 5 von einigen Hilfslinien 6 in deren unteren Bereich abzweigende Kreisbögen 6a und b, die eine angenäherte Kabelverlaufsform darstellen. Wie bereits erwähnt, ist das Spleißmodul weitgehend symmetrisch aufgebaut, insbesondere der in Figur 5 dargestellte Teil. Die Kabel (vergleiche Bezugszeichen 3 in Figur 2) werden möglichst nah an der Schwenkachse A weitergeführt, wenn sie vorn aus den Reihen 4a und b der Führungsstifte ausgetreten sind, im vorliegenden Fall also nach links. Wegen der Symmetrie kann aber das Spleißmodul auch leicht für eine Anordnung der Schwenkachse A vorn rechts genutzt werden, sodass dann statt der Kreisbögen 6a die Kreisbögen 6b nach rechts der Kabelverlaufsform entsprechen.

Jedenfalls erkennt man, dass ein im Wesentlichen gerader Verlauf der Kabel 3 ausgehend von den Patchstellen 2 mit einem Übergang in eine angenäherte Kreisbogenform bei Annäherung an die beiden Reihen 4 der Führungsstifte angestrebt wird. Damit verlaufen die Kabel 3 übersichtlich und voneinander klar getrennt und werden mit kontrollierten Krümmungen zu der Seite umgelenkt, auf der die Schwenkachse A liegt. In diesem Sinn besteht die Hauptaufgabe der Führungsstifte in den beiden Reihen 4a und b in einem entsprechenden Biegeschutz und einer Führung der Kabel, wozu auf Figur 6 verwiesen wird.

Dort ist vergrößert der in Figur 5 eingekreiste Bereich gezeichnet. In dem Ausschnitt aus der Reihe 4a erkennt man vordere Führungsstifte 7a bis 7d und hintere Führungsstifte 8a bis 8d. In Figur 6 sind diese, sowie auch in Figur 5, horizontal geschnitten dargestellt und dementsprechend schraffiert. Bei der Erläuterung wird auf die links vorn liegende Schwenkachse A abgestellt, bei rechter Schwenkachsenlage müsste man sich die Figur 6 und die folgende Erläuterung hinsichtlich des Kabelverlaufs an einer vertikalen Linie in Figur 6 gespiegelt vorstellen.

Figur 6 zeigt zum besseren Verständnis verschiedene Kreisbogenlinien mit jeweils einem Krümmungsradius von 30 mm. Dieser Radius ist für Glasfaserkabel zulässig und im vorliegenden Fall auch bevorzugt, um trotz kompakter Bauweise die gewünschte Umlenkung zu erreichen und (zugunsten der Übersichtlichkeit) die Durchgangsstellen der Kabel 3 durch die beiden Reihen 4a und b gegenüber dem Patchstellen 2 nicht wesentlich in der Querrichtung versetzen zu müssen.

Die dargestellten Kreisbogenlinien verbinden jeweilige Begrenzungslinien des Schnittprofils der Führungsstifte mit gleichem Buchstaben im Bezugszeichen (also 7a und 8a usw.). Dementsprechend bilden nach links oben (in Bezug auf Figur 6) weisende Begrenzungslinien der Führungsstifte 7d und 8d und nach rechts unten weisende Begrenzungslinie der Führungsstifte 7c und 8c zusammen quasi einen Kanal für ein Kabel, das zwischen diesen Führungsstiftepaaren hindurchlaufen kann und dabei durch die Begrenzungslinien auf den gewünschten Radius gebracht wird. Entsprechendes gilt für ein Kabel zwischen den Führungsstiftepaaren 7c und 8c einerseits und 7b und 8b andererseits usw.. Bei spiegelsymmetrischer Kabelführung, also Schwenkachse A rechts vorn, wäre die Paarzuordnung anders (nämlich zum Beispiel 7b und 8a einerseits und 7c und 8b andererseits) und wären dementsprechend jeweils die übrigen Begrenzungslinien der Schnittprofile der Führungsstifte beteiligt.

Dabei sind die Führungsstifte so voneinander beabstandet, dass die "Kanäle" die Kabel einerseits nicht klemmen, andererseits mit möglichst wenig Spiel führen. Insbesondere sind die Abstände zwischen den Führungsstiften 8a und 7b, zwischen 8b und 7c, zwischen 8c und 7d (usw.) auf einen Kabeldurchmesser von hier zum Beispiel 2,4 mm mit einem kleinen zusätzlichen Spiel von ungefähr gut 1 mm eingestellt.

Mit Rücksicht darauf ist noch folgende Detailanmerkung angebracht: Figur 5 zeigt oben einen Steg 9, der sich auch in den Figuren 1 und 2 erkennen lässt (dort nämlich bei 1/4 und 3/4 der Gesamtbreite der Patchstellen 2). Dieser Steg dient zur Stabilisierung, beeinflusst aber geringfügig den Zwischenabstand zwischen den Patchstellen, der nämlich an dieser Stelle leicht erhöht ist (10,8 statt 9,3 mm). Da die in Figur 6 nach oben weisenden Ecken der Querschnittsprofile in der hinteren Reihe 4b jeweils zu den Patchstellen fluchten, ist dementsprechend der Abstand zwischen den Führungsstiften 8c und 8d etwas größer, jedenfalls auf diese Ecke bezogen, als der zwischen den Führungsstiften 8a, b und c. Deswegen ist das Querschnittsprofil des Führungsstifte 8c gemäß Figur 6 etwas asymmetrisch und gewissermaßen nach rechts unten etwas verlängert, damit der Abstand zum Führungsstift 7d der oben diskutierten Vorgabe entspricht (gleiches gilt spiegelsymmetrisch für den Führungsstift 8d). Das Querschnittsprofil des Führungsstifts 7c ist daran angepasst, sodass auch dieser zwischen die dementsprechend etwas weiter voneinander beabstandeten Kreisbogenlinien passt, die in Figur 6 eingezeichnet sind. Mit der Fluchtung zwischen den Führungsstiften 8c und 7d bezüglich der für eine rechts vorn liegende Schwenkachse A relevanten Kreisbogenlinie erklärt sich auch die in Figur 6 etwas tiefere Lage des Profils des Führungsstifts 7d.

Ferner sieht man in Figur 5 ungefähr im rechten Drittel der beiden Führungsstiftereihen 4a und b diese Führungsstifte (einschließlich der weiter unten erläuterten äußeren Führungsstifte 10b und 11b) in Draufsicht und nicht geschnitten. Daraus ergibt sich im Vergleich zum mittleren und linken Drittel der Führungsstiftereihen und auch anhand Figur 2, dass das Schnittprofil der Führungsstifte in der hinteren Reihe 4b bis zu deren oberen (distalen) Ende gleichbleibt und die Führungsstifte in der vorderen Reihe 4a an ihrem distalen oberen Ende verbreitert sind, also gewissermaßen kopfseitige Platten tragen (analog für die entsprechenden vorderen Enden der äußeren Führungsstifte 10b und 11b). Diese Verbreiterungen verkleinern die Zwischenräume zwischen den Führungsstiften. Insbesondere können in den links in Figur 5 dargestellten kreisbogenförmigen Bahnen 6a und b verlaufende Kabel nicht mehr nach oben aus der vorderen Führungsstiftereihe 4a heraus geführt werden, ohne sie deutlich aus dieser Kreisbogenbahn zu verformen. Dementsprechend können die Kabel von oben (manuell) eingefädelt werden und liegen dann in den Kreisbogenbahnen 6a und 6b gesichert. Das gilt insbesondere, soweit sie nach links (oder bei anderer Schwenkachsenlage rechts) weggeführt sind.

Außerdem zeigt Figur 5, dass ganz rechts und ganz links außen jeweils zwei besondere Führungsstifte 10 und 11 a und b vorgesehen sind. Diese sind insoweit besonders, als die Trennung zwischen einzelnen Führungsstiften in den beiden Reihen 4a und b aufgegeben wurde, sodass die Führungsstifte jeweils nur in einer horizontalen Richtung betrachtet schlank sind. Im Übrigen gelten hinsichtlich der Radien die bisherigen Erläuterungen. Hintergrund ist, dass diese Führungsstifte jeweils nur für nach außen gekrümmte Kabel relevant sind. Die äußersten Führungsstifte 10a und 10b sind dabei ohnehin nur zur Innenseite hin zur Führung relevant und könnten insoweit auch mit anderen Elementen verschmelzen. Sie decken ausnahmsweise auch keine Patchstelle optisch ab. Ähnliche Anmerkungen gelten für besondere Führungsstifte 12 a und b in der Nähe der Mitte der beiden Reihen 4a und b und eine zentrale Führungsstruktur 13 mit ungefähr V-förmigem Profil. An dieser Stelle gibt es eine mittige Trägerstruktur 14, die einerseits die Basis der beiden Führungsstiftereihen 4a und b mittig stabilisiert und andererseits nach vorn hin eine Klammer zum Halten eines Kabelbündels bildet, das von der in Bezug auf die Schwenkachse A äußeren Hälfte der Reihen 4a und b zur Schwenkachse A geführt werden soll. Dies verhindert ein zu weites Durchhängen dieses Kabelbündels.

## Patentansprüche

1. Spleißmodul (1) mit
Spleißstellenablagen für Lichtwellenleiter-, LWL-, Kabel darin und
einer Mehrzahl Patchstellen (2) mit jeweils zumindest einem ersten Teil einer lösbaren Verbindungseinrichtung für ein jeweiliges LWL-Pigtailkabel, welcher erste Teil mit einem jeweiligen zweiten Teil der Verbindungseinrichtung verbunden werden kann zum Verbinden des Pigtailkabels an dem ersten Teil mit einem LWL-Patchkabel (3) an dem zweiten Teil,
wobei die Patchstellen (2) in einer zu einer lokalen Leitungsrichtung darin, also einer LWL-Kabelrichtung in der jeweiligen Verbindungseinrichtung, gewinkelten Richtung nebeneinander angeordnet sind,
und eine Mehrzahl Führungsstifte (7a-12b) für mit den zweiten Verbindungseinrichtungsteilen an den Patchstellen (2) anzuschließende oder angeschlossene Patchkabel (3) vorgesehen sind, und zwar von den Patchstellen (2) und den ersten Verbindungseinrichtungsteilen in Richtung von den Pigtailkabeln weg beabstandet,
wobei die Patchstellen (2) und die Führungsstifte (7a-12b) spiegelsymmetrisch bezüglich einer zentralen Symmetrieebene sind,
welche Führungsstifte (7a-12b) voneinander ausreichend beabstandet sind, dass zwischen ihnen die Patchkabel (3) geführt werden können,
**dadurch gekennzeichnet, dass** zumindest ein Teil (8a-d, 11a-12b) der Führungsstifte in solcher Weise auf eine Projektion der Patchstellen (2) entlang der lokalen Leitungsrichtung an den Patchstellen (2), also der LWL-Kabelrichtung in der jeweiligen Verbindungseinrichtung, ausgerichtet sind, dass Lichtsignale aus den Pigtailkabeln und den ersten Verbindungseinrichtungsteilen durch diese Führungsstifte (8a-d, 11a-12b) abgeschattet werden, wenn keine zweiten Verbindungseinrichtungsteile an den ersten Verbindungseinrichtungsteilen angebracht sind.

2. Spleißmodul (1) nach Anspruch 1, bei dem die Patchstellen (2) in einer geraden Reihe nebeneinander angeordnet sind und die Führungsstifte (7a-8d) ebenfalls in einer geraden Reihe (4a,b) nebeneinander angeordnet sind, wobei die Reihen (4a,b) mindestens in einer Projektion entlang der lokalen Leitungsrichtung an den Patchstellen (2), also der LWL-Kabelrichtung in der jeweiligen Verbindungseinrichtung, zueinander parallel sind und die zentrale Symmetrieebene senkrecht zu der Richtung der beiden Reihen (4a,b) ist.

3. Spleißmodul (1) nach Anspruch 2, bei dem die Führungsstifte (7a-8d) mindestens in einer Projektion entlang der lokalen Leitungsrichtung an den Patchstellen (2), also der LWL-Kabelrichtung in der jeweiligen Verbindungsrichtung, senkrecht zu der Richtung der geraden Reihen (4a,b) stehen.

4. Spleißmodul (1) nach einem der vorstehenden Ansprüche, bei dem zumindest ein Teil (7a-7d) der Führungsstifte an einem distalen Ende verbreitert sind, um die Patchkabel (3) besser zu sichern.

5. Spleißmodul (1) nach einem der vorstehenden Ansprüche, mindestens Anspruch 2, bei dem zwischen den ersten Verbindungseinrichtungsteilen und den Führungsstiften (7a-12b) ein Zwischenabstand von mindestens 30 mm besteht, wobei vorzugsweise in diesem Zwischenabstand eine Durchgriffsmöglichkeit besteht zur leichteren Montage von zweiten Verbindungseinrichtungsteilen mit Patchkabeln (3).

6. Spleißmodul (1) nach einem der vorstehenden Ansprüche, mindestens Anspruch 2, bei dem die Führungsstifte (7a-8d) in mindestens zwei in der lokalen Leitungsrichtung voneinander beabstandeten Reihen (4a,b) vorgesehen sind und vorzugsweise in den beiden Reihen (4a,b) in einer Projektion entlang der lokalen Leitungsrichtung gegenseitig auf Lücke angeordnet sind.

7. Spleißmodul (1) nach Anspruch 6 und Anspruch 4, bei dem die Führungsstifte (7a-d) in einer der Reihen (4a) an einem distalen Ende verbreitert sind und die übrigen Führungsstifte (8a-d) in der/den anderen Reihe(n) (4b) nicht.

8. Spleißmodul (1) nach einem der vorstehenden Ansprüche mit mindestens n-2 Führungsstiften (7a-12b) für n Patchstellen (2).

9. Spleißmodul (1) nach einem der vorstehenden Ansprüche, bei dem auf einer von den Verbindungseinrichtungen abgewandten Seite der Führungsstifte (7a-12b) mindestens eine Stütze (14) für zwischen den Führungsstiften (7a-12b) geführte Patchkabel (3) zum Verhindern eines Durchhängens der Patchkabel (3) durch Unterstützung von unten und vorzugsweise zum Bündeln der Patchkabel (3) durch Halten auch von einer zu den Führungsstiften (7a-12b) entgegengesetzten Seite vorgesehen ist.

10. Spleißmodul (1) nach einem der vorstehenden Ansprüche, bei dem mindestens ein Teil der Führungsstifte (7a-12b), im Fall des Anspruchs 6 vorzugsweise mindestens die Führungsstifte in einer der Reihen, in einer Schnittebene, die die Führungsstifte (7a-12b) und die Patchstellen (2) durchsetzt, durch zumindest zwei, vorzugsweise vier Begrenzungslinien mit einem jeweiligen Krümmungsradius von mindestens 30 mm und höchstens 50 mm begrenzt sind.

11. Stapel von Spleißmodulen (1) nach einem der vorstehenden Ansprüche, welche Spleißmodule (1) gestapelt sind und aus dem Stapel einzeln in geführter Weise zum Zugang einer Bedienperson zu Spleißstellen in den Spleißstellenablagen heraus bewegbar sind.

12. Verteilerschrank mit einer Mehrzahl Spleißmodule (1) nach einem der Ansprüche 1 bis 10 oder zumindest einem Spleißmodulstapel nach Anspruch 11 darin.

13. Verwendung eines Spleißmoduls (1) nach einem der Ansprüche 1 bis 10 oder eines Spleißmodulstapels nach Anspruch 11 oder eines Verteilerschranks nach Anspruch 12 zum Anschließen von Patchkabeln (3) mit daran vorgesehenen zweiten Verbindungseinrichtungsteilen an den ersten Verbindungseinrichtungsteilen eines Spleißmoduls (1) und Führen der Patchkabel (3) mit den Führungsstiften (7a-12b).

## Claims

1. A splice module (1)
containing splice point receivers for optical fibre cables and
comprising a plurality of patch points (2) each with at least a first part of a detachable connection device for a respective optical fibre pigtail cable, which first part can be connected to a respective second part of the connection device to connect the pigtail cable on the first part to an optical fibre patch cable (3) on the second part,
wherein the patch points (2) are arranged next to each other in a direction angled to a local line direction therein, in other words to an optical fibre cable direction in the respective connection direction,
and a plurality of guide pegs (7a-12b) are provided for patch cables (3) connected to or to be connected to the second connection device parts at the patch points (2), which guide pegs are spaced away from the patch points (2) and the first connection device parts, on the side further from the pigtail cables,
wherein the patch points (2) and the guide pegs (7a-12b) are mirror-symmetrical in respect of a central plane of symmetry,
which guide pegs (7a-12b) are sufficiently spaced from each other so that the patch cables (3) can be routed between them,
**characterised in that** at least a part (8a-d, 11a-12b) of the guide pegs are aligned to a projection of the patch points (2) along the local line direction at the patch points (2), in other words along the optical fibre cable direction in the respective connection device such that light signals from the pigtail cables and the first connection device parts are shadowed by these guide pegs (8a-d, 11a-12b) if no second connection device parts are attached to the first connection device parts.

2. The splice module (1) according to claim 1, wherein the patch points (2) are arranged in a straight row next to each other and the guide pegs (7a-8d) are also arranged in a straight row (4a,b) next to each other, wherein the rows (4a,b) are parallel to each other, at least in a projection along the local line direction at the patch points (2), in other words along the optical fibre cable direction in the respective connection device, and the central plane of symmetry is perpendicular to the direction of the two rows (4a,b).

3. The splice module (1) in accordance with claim 2, wherein the guide pegs (7a-8d), at least in a projection along the local line direction at the patch points (2), in other words along the optical fibre cable direction in the respective connection device, are perpendicular to the direction of the straight rows (4a,b).

4. The splice module (1) according to one of the preceding claims, wherein at least a part (7a-7d) of the guide pegs are widened at a distal end in order to more reliably secure the patch cables (3).

5. The splice module (1) according to one of the preceding claims, but at least claim 2, wherein there is a gap of at least 30 mm between the first connection device parts and the guide pegs (7a-12b), wherein a reach-through passage is preferably possible in this gap for easier assembly of second connection device parts with patch cables (3).

6. The splice module (1) according to one of the preceding claims, but at least claim 2, wherein the guide pegs (7a-8d) are provided in at least two rows (4a,b) at a distance from each other in the local line direction and are preferably arranged in a staggered manner in the two rows (4a,b) in a projection along the local line direction.

7. The splice module (1) according to claim 6 and claim 4, wherein the guide pegs (7a-d) in one of the rows (4a) are widened at a distal end and the remaining guide pegs (8a-d) in the other row(s) (4b) are not.

8. The splice module (1) according to one of the preceding claims, comprising at least n-2 guide pegs (7a-12b) for n patch points (2).

9. The splice module (1) according to one of the preceding claims, wherein at least one bracing (14) for patch cables (3) routed between the guide pegs (7a-12b) for preventing the patch cables (3) from sagging by supporting them from underneath and preferably for bundling the patch cables (3) by also holding them from a side opposite to the guide pegs (7a-12b) is provided on a side of the guide pegs (7a-12b) facing away from the connection devices.

10. The splice module (1) according to one of the preceding claims, wherein at least a part of the guide pegs (7a-12b), and in the case of claim 6 preferably at least the guide pegs in one of the rows, in a cutting plane that passes through the guide pegs (7a-12b) and the patch points (2), is delimited by at least two, but preferably four limiting lines with a respective radius of curvature of at least 30 mm and no more than 50 mm.

11. A stack of splice modules (1) according to one of the preceding claims, which splice modules (1) are stacked and can be moved out of the stack individually in a guided manner to enable an operator to access splice points in the splice point receivers.

12. A distribution cabinet containing a plurality of splice modules (1) according to one of claims 1 to 10 or at least a stack of splice modules according to claim 11.

13. Use of a splice module (1) according to one of claims 1 to 10 or a stack of splice modules according to claim 11 or a distribution cabinet according to claim 12 for connecting patch cables (3) provided with second connection device parts to the first connection device parts of a splice module (1) and routing the patch cables (3) using the guide pegs (7a-12b).

## Revendications

1. Module d'épissure (1)
renfermant des éléments récepteurs de points d'épissure pour câbles à fibre optique et
comportant une pluralité de points de raccordement (2) dotés chacun d'au moins une première partie d'un dispositif de connexion détachable destinée à un câble amorce à fibre optique respectif, laquelle première partie peut être reliée à une deuxième partie respective du dispositif de connexion pour connecter le câble amorce présent sur la première partie à un câble de raccordement à fibre optique (3) présent sur la deuxième partie ;
dans lequel les points de raccordement (2) sont agencés côte à côte dans une direction oblique par rapport à la direction locale de ligne dans lesdits points de raccordement, c'est-à-dire la direction du câble à fibre optique dans son dispositif de connexion respectif, et
dans lequel il est prévu une pluralité de plots de guidage (7a-12b) pour des câbles de raccordement (3) reliés ou à relier aux deuxièmes parties de dispositif de connexion au niveau des points de raccordement (2), lesquels plots de guidage sont espacés des points de raccordement (2) et des premières parties de dispositif de connexion du côté éloigné des câbles amorces,
lesdits points de raccordement (2) et lesdits plots de guidage (7a-12b) étant en symétrie spéculaire par rapport à un plan de symétrie central,
lesdits plots de guidage (7a-12b) étant suffisamment espacés les uns des autres pour que les câbles de raccordement (3) puissent passer entre eux,
**caractérisé en ce qu'**au moins une partie (8a-d, 11a-12b) des plots de guidage sont alignés sur une projection des points de raccordement (2) le long de la direction locale de ligne au niveau des points de raccordement (2), c'est-à-dire la direction du câble à fibre optique présent dans son dispositif de connexion respectif, de telle façon que les signaux lumineux sortant des câbles amorces et des premières parties de dispositif de connexion sont obscurcis par ces plots de guidage (8a-d, 11a-12b) lorsqu'aucune deuxième partie de dispositif de connexion n'est agencée sur les premières parties de dispositif de connexion.

2. Module d'épissure (1) selon la revendication 1, dans lequel les points de raccordement (2) sont agencés côte à côte en rangée droite et les plots de guidage (7a-8d) sont également agencés côte à côte en rangée droite (4a,b), lesdites rangées (4a,b) étant parallèles entre elles au moins dans une projection le long de la direction locale de ligne au niveau des points de raccordement (2), c'est-à-dire la direction du câble à fibre optique présent dans son dispositif de connexion respectif, et le plan de symétrie central est perpendiculaire à la direction des deux rangées (4a,b).

3. Module d'épissure (1) selon la revendication 2, dans lequel les plots de guidage (7a-8d) sont perpendiculaires à la direction des rangées droites (4a,b), au moins dans une projection le long de la direction locale de ligne au niveau des points de raccordement (2), c'est-à-dire la direction du câble à fibre optique présent dans son dispositif de connexion respectif.

4. Module d'épissure (1) selon l'une des revendications précédentes, dans lequel au moins une partie (7a-7d) des plots de guidage sont élargis au niveau d'une extrémité distale afin de mieux bloquer les câbles de raccordement (3).

5. Module d'épissure (1) selon l'une des revendications précédentes, au moins selon la revendication 2, dans lequel il se trouve un espace d'au moins 30 mm entre les premières parties de dispositif de connexion et les plots de guidage (7a-12b), cet espace permettant de préférence une possibilité de passage pour faciliter le montage de deuxièmes parties de dispositif de connexion avec des câbles de raccordement (3).

6. Module d'épissure (1) selon l'une des revendications précédentes, au moins selon la revendication 2, dans lequel les plots de guidage (7a-8d) sont prévus en au moins deux rangées (4a,b) espacées l'une de l'autre dans la direction locale de ligne et sont de préférence agencés en quinconce dans lesdites deux rangées (4a,b), dans une projection le long de la direction locale de ligne.

7. Module d'épissure (1) selon la revendication 6 et la revendication 4, dans lequel les plots de guidage (7a-d) d'une des rangées (4a) sont élargis au niveau d'une extrémité distale et les autres plots de guidage (8a-d) de la ou des autres rangées (4b) ne le sont pas.

8. Module d'épissure (1) selon l'une des revendications précédentes, comportant au moins n-2 plots de guidage (7a-12b) pour n points de raccordement (2).

9. Module d'épissure (1) selon l'une des revendications précédentes, dans lequel il est prévu, sur un côté des plots de guidage (7a-12b) détourné des dispositifs de connexion, au moins un support (14) destiné à soutenir par le dessous les câbles de raccordement (3) passant entre les plots de guidage (7a-12b) et ainsi à empêcher lesdits câbles de raccordement (3) de pendre et destiné de préférence à regrouper les câbles de raccordement (3) en les retenant également par un côté opposé aux plots de guidage (7a-12b).

10. Module d'épissure (1) selon l'une des revendications précédentes, dans lequel au moins une partie des plots de guidage (7a-12b), et dans le cas la revendication 6 de préférence au moins les plots de guidage d'une des rangées, sont délimités, dans un plan de coupe traversant les plots de guidage (7a-12b) et les points de raccordement (2), par au moins deux et de préférence quatre lignes de délimitation présentant un rayon de courbure respectif d'au moins 30 mm et d'au plus 50 mm.

11. Empilement de modules d'épissure (1) selon l'une des revendications précédentes, lesquels modules d'épissure (1) sont empilés et peuvent être individuellement retirés de l'empilement en étant guidés pour permettre à un opérateur d'accéder aux points d'épissure dans les éléments récepteurs de points d'épissure.

12. Armoire de distribution renfermant une pluralité de modules d'épissure (1) selon l'une des revendications 1 à 10 ou au moins un empilement de modules d'épissure selon la revendication 11.

13. Utilisation d'un module d'épissure (1) selon l'une des revendications 1 à 10, d'un empilement de modules d'épissures selon la revendication 11 ou d'une armoire de distribution selon la revendication 12 permettant de connecter des câbles de raccordement (3) dotés de deuxièmes parties de dispositif de connexion aux premières parties de dispositif de connexion d'un module d'épissure (1) et de guider lesdits câbles de raccordement (3) au moyen des plots de guidage (7a-12b).
